# EUROPÄISCHE PATENTSCHRIFT

(11) **EP 0 859 974 B1**
(45) Veröffentlichungstag und Bekanntmachung des Hinweises auf die Patenterteilung: **13.10.1999**
(21) Anmeldenummer: 96945852.0
(22) Anmeldetag: 31.10.1996
(51) Int. Cl.: G06F 1/16

(54) **COMPUTERGEHÄUSE**
COMPUTER HOUSING
BOITIER D'ORDINATEUR

(30) Priorität: 31.10.1995 DE 29517244 U; 01.03.1996 DE 29603765 U; 06.03.1996 DE 29604113 U; 13.03.1996 DE 29604674 U
(43) Veröffentlichungstag der Anmeldung: 26.08.1998
(73) Patentinhaber: Hagedorn, Markus, 41468 Neuss (DE)
(72) Erfinder: Hagedorn, Markus, 41468 Neuss (DE)
(74) Vertreter: Weingart, Günter
(86) Internationale Anmeldenummer: DE9602085
(87) Internationale Veröffentlichungsnummer: WO9716781

(56) Entgegenhaltungen:
- EP-A- 0 425 191
- WO-A-95/20785
- DE-A- 2 128 353
- DE-U- 9 106 305
- DE-U- 29 508 214
- DE-U- 29 604 777

## Beschreibung

Die Erfindung betrifft ein Computergehäuse, bestehend aus einem Gehäuserahmen, Gehäusewandteilen sowie zumindest teilweise verschwenkbaren Trag- und Befestigungseinheiten für Computerfunktionseinheiten, wobei mindestens eine Trageinheit, bestehend aus Hauptplatinenträger und Erweiterungskarten-träger, vorhanden ist, welche aus einer Einbauposition in eine Montage- und Wartungsposition verschwenkbar ausgebildet ist.

Gattungsgemäße Computergehäuse sind in großer Zahl im alltäglichen Einsatz. Gemäß dem Stand der Technik definiert ein ein- oder mehrteiliger Gehäuserahmen ein im wesentlichen quaderförmiges Volumen, welches im wesentlichen die dreidimensionalen Abmessungen des Computers bildet. Dabei wird unter Berücksichtigung der Anforderungen an ein geringes Gewicht eine Rahmenkonstruktion bevorzugt, die mit Gehäusewandteilen verkleidet werden kann. Es ist durchaus bekannt und üblich, einzelne Seiten des Gehäuserahmens vollflächig auszugestalten, so daß hier eine spätere Gehäuseaußenseite gebildet wird. Die einzelnen Seiten werden durch Gehäusewandteile verkleidet, wobei die Gehäusewandteile einzelne Flächen oder auch Gehäuseschalen sein können. So sind ein- oder zweiseitige Einschubgehäusewandteile bekannt, dreiseitig offene, deckelartige Gehäusewandteile, oder auch ein- oder mehrflächige Wandteile. Sämtliche Gehäusewandteile werden am Gehäuserahmen beispielsweise durch Schraub-, Klemm- oder Hakenverbindungen befestigt. Üblicherweise ist eine Seite des Gehäuserahmens als Frontseite ausgebildet und entweder mit einem Frontwandteil verkleidet oder direkt als solches ausgebildet. So ist auch bei der Rückseite eines Computergehäuses meist der Gehäuserahmen direkt als Rückwandteil ausgebildet. Vor dem Frontwandteil befindet sich meist eine Kunststoffverkleidung, in die die Bedienelemente für den Computer, wie Ein- und Ausschalter, Resetschalter, Turboschalter, die Anzeigen wie Leuchtdioden oder auch die Schnittstellen, wie z.B. eine serielle Schnittstelle zur Kommunikation, fest eingebaut sind. Es ist auch bekannt, einzelne Wandteile, wie die Frontwand durch abschließbare Türen oder Klappen gegen unberechtigten Zugriff zu schützen. In dem Inneren des Gehäuserahmens verbleibt ein mit den eigentlichen Computerfunktionseinheiten bestückbarer Raum. Zu diesem Zweck wird der Rahmen mit Träger- oder Befestigungseinheiten ausgefacht. Diese sind weitestgehend hinsichtlich der Befestigungsmöglichkeiten für Computerfunktionseinheiten normiert und dienen der Anordnung herkömmlicher und in großen Stückzahlen produzierter Funktionseinheiten, wie Platinen, Erweiterungskarten, Laufwerken, Netzteilen und dergleichen, im Gehäuse.

Für die Hauptplatine, dem sogenannten Mainboard, ist eine Trägerplatte mit normierten Bohrungen versehen, die mit in den Mainboards angeordneten Befestigungsbohrungen korrespondieren. Erweiterungskarten werden üblicherweise einzeln an einem Befestigungsgitter angeschraubt, welches im rechten Winkel zur Trägerplatte des Mainboards steht und an der Rückwand des Gehäuses befestigt ist. Es sind aber auch Klemmleisten, die in die Bohrlöcher des Befestigungsgitters einrasten, zur Befestigung der Karten bekannt. Für Laufwerke und ähnliche Computerfunktionseinheiten wird an vorgegebenen Stellen des Gehäuserahmens üblicherweise eine ein- oder mehrstückige Einbauschachteinheit als Träger angeordnet, die eine bestimmte Anzahl von Einbauschächten für Computerfunktionseinheiten, wie z.B. Festplatten, Streamer oder Floppy-Laufwerke in zwei bestimmten Größen, meist in 3.5 Zoll halber Bauhöhe und 5,25 Zoll halber Bauhöhe, aufweist. Die Computerfunktionseinheiten werden üblicherweise mit Schrauben in den Einbauschächten befestigt. Entsprechend dieser Einschübe sind Öffnungen in dem Frontwandteil vorgesehen, damit die Laufwerke bei Bedarf von außen zugänglich sind. Diese Öffnungen sind üblicherweise so gestaltet, daß sie mittels speziell angefertigter anschraubbarer Blenden wieder verschließbar sind, wenn sie nicht mehr benötigt werden. Die entsprechenden Öffnungen in der Kunststoffverkleidung werden üblicherweise mit entsprechenden Kunststoffblenden wieder verschlossen. Es ist auch bekannt, einzelne Trägereinheiten für das Computergehäuse zu fertigen, die einhängbar und entnehmbar ausgebildet sind.

Unabhängig davon und in separaten Produktionslinien, werden die Computerfunktionseinheiten gefertigt. Bei der Montage der Computer werden die vorgefertigten Gehäuse mit Computerfunktionseinheiten entsprechend der dafür vorgesehenen Trageinheiten bestückt. Dazu ist es notwendig, die Platinen und Erweiterungskarten in den Trageinheiten im Computergehäuse zu befestigen, ebenso wie die Laufwerke, Netzteile und dergleichen. Anschließend müssen die Computerfunktionseinheiten miteinander verkabelt werden.

Da die Computergehäuse heute so klein wie möglich konstruiert werden, ist die Zugänglichkeit zu den in das Gehäuse eingebauten Computerfunktionseinheiten stark eingeschränkt. Wenn man aufgrund der Erstmontage oder der Wartung Stecker aufstecken sowie neue Computerfunktionseinheiten einbauen will, muß man häufig andere Komponenten lösen, entfernen oder die Steckverbinder ertasten. Die heutige Bauweise von Computergehäusen macht es erforderlich, daß ein Gehäuse bei der Bestückung mit Computerfunktionseinheiten nur eine aufeinanderfolgende Bestückung erlaubt. So muß z. B. erst die Hauptplatine, dann die Erweiterungskarten und dann die Laufwerke eingebaut werden. Dabei muß das Gehäuse mehrfach gedreht werden. Ein weiterer Nachteil der Gehäuse, die dem Stand der Technik entsprechen, ist, daß die Gehäusedeckel oder Wandteile meist mit mehreren verschiedenen Befestigungsmitteln gehalten werden, die zur Montage oder Wartung sämtlich zeitaufwendig gelöst werden müssen. Es sind hierbei Haken, Klemm- und Schraubverbindungen bekannt. Ferner ist das Einsetzen der Wandteile oder Deckel nicht einfach, da die Teile nur schlecht durch Haken in ihrer endgültigen Montageposition gehalten werden. Ebenfalls nachteilig ist bei diesen Gehäusen, daß keine Kabelhalterungen vorgesehen sind. Dies führt bei der geringen Baugröße heutiger Gehäuse dazu, daß lose Kabel an heiße Computerfunktionseinheiten geraten und so einen Kabelbrand verursachen können. Die losen Kabel beeinträchtigen auch die Übersichtlichkeit im Gehäuse.

Einige Computerhersteller rüsten die Gehäuse aus diesem Grund mit zusätzlichen Kabelhalterungen nach.

Aus den DE 295 08 214 ist beispielsweise ein Rechnergehäuse bekannt, welches eine verschwenkbare Trag- und Befestigungseinheit in Form einer Seitenwand aufweist. Diese Seitenwand ist im Weiteren mit Befestigungsschienen und einer gerippten Blende ausgestattet, welche zur Befestigung von Erweiterungskarten vorgesehen ist. Um eine bessere Kühlung des Netzteiles zu ermöglichen und die sonstigen Bauelemente räumlich vom Netzteil zu trennen, ist in dem Rechnergehäuse eine Zwischenwand vorhanden, welche einen Ausschnitt in der Größe der Blende aufweist und im hochgeklappten Zustand der Seitenwand durch die Zwischenwand und Blende eine räumliche Trennung zwischen den Computerkomponenten und dem Netzeil ermöglicht. Durch die Anordnung der Erweiterungskarten innerhalb des Gehäuses sind die vorhandenen Steckkontakte bzw. Steckbuchsen der Erweiterungskarten von außen nicht zugänglich und erschweren einfache Montage- und Wartungsarbeiten.

Aus der DE 296 04 777 ist im Weiteren ein Computergehäuse mit wenigstens einem verschwenkbar am Gehäuserahmen befestigten Chassis bekannt, bei dem schanierartig geformte Teile zusammenwirken und die Verschwenkbarkeit einzelner Trageinheiten ermöglichen.

Aus dem beschriebenen Stand der Technik liegt der vorliegenden Erfindung die Aufgabe zugrunde, ein Computergehäuse der gattungsgemäßen Art weiterzuentwickeln, so daß eine einfache Montage und Demontage unter gleichzeitiger Verbesserung und Erleichterung der Wartungsarbeiten möglich ist.

Erfindungsgemäß ist zur Lösung der technischen Aufgabe vorgesehen, daß der mit dem Hauptplatinenträger gemeinsam verschwenkbare Erweiterungskartenträger in der Einbauposition zumindestens einen Teil einer äußeren Seitenwand bildet. Durch diese erfindungsgemäße Ausgestaltung ist es möglich, daß das durch den Gehäuserahmen vorgegebene Volumen zugänglicher wird, so daß beispielsweise die Trageinheit, bestehend aus dem Hauptplatinen- und Erweiterungskartenträger für eine automatische und industrielle Bestückung ausgeschwenkt werden kann, ebenso wie für eine erleichterte Endmontage und Verkabelung sowie insbesondere für eine spätere Wartung.

Mit besonderem Vorteil wird somit vorgeschlagen, daß die Trageinheit für die Hauptplatine mit der Befestigungseinheit für die Erweiterungskarten zu einer Einheit verbunden und in ihrer Gesamtheit in erfindungsgemäßer Weise relativ zum Gehäuserahmenelement verschwenkbar sind. Durch diese Maßnahmen wird auch eine weitere Bestückung des Computers mittels der Erweiterungskarten und eine anschließende Verkabelung erleichtert. Die Befestigungseinheit für Erweiterungskarten ist ein gitterförmiges Element, welches Schlitze für die Bleche der Erweiterungskarten aufweist, so daß an den Karten angeordnete Schnittstellen von außen zugänglich sind. An einer Kante können diese Bleche mittels Schrauben oder anderer Befestigungsmittel an dem Befestigungselement befestigt werden. Dieses Befestigungselement steht üblicherweise rechtwinklig zur Trageinheit für die Hauptplatine, da die Hauptplatine die Einsteckschlitze für die Erweiterungskarten aufweist. Ggfs. können in vorteilhafter Weise auch mehrere Trageinheiten, bestehend aus einem Hauptplatinen- und Erweiterungskartenträger, in einem Gehäuse angeordnet sein.

In vorteilhafter Ausgestaltung ist vorgesehen, daß mindestens eine weitere Trageinheit gegenüber dem Gehäuserahmen aus einer Einbauposition in eine Montage- und Wartungsposition verschwenkbar ausgebildet ist, so daß die Zugänglichkeit weiter erhöht wird. Hierbei kann in vorteilhafter Weise eine oder mehrere der verschwenkbaren Trageinheiten zusätzlich lösbar am Gehäuserahmen einhängbar ausgebildet sein. Diese Ausgestaltung bietet die Möglichkeit, die Trageinheit auch völlig unabhängig vom Gehäuserahmen zu bestücken oder zu bearbeiten und anschließend einzuhängen und -schwenken. Diese Maßnahme begünstigt im weiteren eine automatische bzw. industrielle wirtschaftliche Montage und Wartung und darüber hinaus eine vereinfachte Bevorratung. Es ist durch die erfindungsgemäße Ausgestaltung möglich, einzelne Trageinheiten außerhalb des Computergehäuses gleichzeitig, parallel zu bestücken und anschließend in das Gehäuse ausgeschwenkt einzuhängen. Die Übersichtlichkeit und Zugriffsmöglichkeiten auf einzelne Anschlüsse wird durch die ausgeschwenkten Trageinheiten in vorteilhafter Weise erhöht. Das Gehäuse kann zudem eine kleinere Abmessung aufweisen, weil kein Raum für die Hände zur Montage benötigt wird.

Um das Computergehäuse während des Betriebs des Computers horizontal und vertikal aufstellen zu können, ist vorgesehen, daß mindestens eine Trageinheit im Gehäuse wahlweise horizontal oder vertikal verschwenkbar angeordnet und in der jeweiligen Position arretierbar ist. Diese Trageinheit kann beispielsweise für Computerfunktionseinheiten verwendet werden, welche nur in einer speziellen Lage, meistens horizontal, einen ungestörten Betrieb gewährleisten. Durch die Anordnung kann demzufolge das Computergehäuse zum besonderen Vorteil in den beiden oben angegebenen Lagen mit diesen besonderen Computerfunktionseinheiten verwendet werden.

In Weiterer Ausgestaltung der Erfindung ist vorgesehen, daß eine Trageinheit zur Ausstattung mit einer Trägereinheit mit Bedien-, Anzeigeelementen, mindestens einem Minischalter, einer Audiobuchse, einer Videobuche, einem 3,5 Zoll-Laufwerk und/oder einer Schnittstelle ausgestattet ist.

In weiterer Ausgestaltung ist vorgesehen, daß eine L-förmige Blende zum Verschließen der vorhandenen Öffnung im Gehäusewandteil zur Befestigung der vertikal bzw. horizontal angeordneten Trageinheit vorgesehen ist, sofern die Trageinheit unterschiedliche Abmessungen in der Höhe und Breite aufweist. Mit Hilfe der L-förmigen Blende, z. B. in Form eines Blechteiles, kann die Trageinheit um 90 Grad gekippt eingesetzt werden, wobei die Blende an den Befestigungsvorrichtungen für nicht gekippt eingesetzte Trageinheiten befestigt wird und die Fläche abdeckt, die nicht durch die dahinter montierte Trageinheit ausgefüllt wird. Die L-förmige Blende weist Befestigungsvorrichtungen für die um 90 Grad gekippte Trageinheit auf, die denen für nicht gekippte Trageinheiten entsprechen. Das Blechteil bringt den besonderen Vorteil mit sich, daß der Platz an dem die Blende montiert wird, dann für andere Trageinheiten zur Verfügung steht, wenn keine Trageinheit um 90 Grad gekippt eingebaut werden soll. Benötigt man aber eine um 90 Grad gekippte Trageinheit, weil z. B. das Gehäuse auf einem Tisch liegend verwendet werden soll, so kann in vorteilhafter Weise das gleiche Gehäuse weiterverwendet werden.

In vorteilhafter Weise werden die Schwenkbarkeit und die Einhängbarkeit dadurch realisiert, daß wenigstens eine verschwenkbare Trageinheit Scharnierelemente aufweist, die mit am Gehäuserahmen angeordneten korrespondierenden Gegenstücken zusammenwirken. Als Scharnierelemente haben sich Kombinationen hakenförmiger Vorsprünge als vorteilhaft erwiesen, die mit Aussparungen, vorzugsweise Löchern im Gehäuserahmenelement zusammenwirken. Die Aussparungen sind gemäß einer vorteilhaften Ausgestaltung der Erfindung jeweils in einem Teil des Gehäuserahmen ausgebildet, welches sich aus der Gehäuserahmenebene herausbiegen läßt, beispielsweise einer Lasche. Nach dem Herausbiegen lassen sich die Hakenelemente in die Löcher einsetzen.

Die Erfindung sieht ferner vor, daß die Trageinheiten für die Hauptplatine mit den Erweiterungskarten schwenkbar und/oder lösbar einhängbar ausgebildet sind. Darüber hinaus können gemäß der Erfindung auch mehrere oder alle Trageinheiten schwenkbar und entnehmbar gestaltet sein, beispielsweise die Trageinheit für die Hauptplatine oder der Einschubrahmen für die Laufwerke und die Trageinheit für die Spannungsversorgungseinrichtungen. In dem Falle, daß mehrere Trageinheiten verschwenkbar sind, wird zum besonderen Vorteil der Erfindung vorgeschlagen, daß diese zur gleichen Seite des Gehäuserahmens hin verschwenkbar sind. Diese Maßnahme begünstigt nicht nur die Bestückung und Wartung sondern in vorteilhafter Weise auch die Endmontage, insbesondere das Verkabeln. Die ausgeschwenkten Einheiten lassen sich leicht verkabeln und anschließend wieder einschwenken.

In vorteilhafter Weise werden die verschwenkbaren Trageinheiten mittels eines Fixierelementes in der Einbauposition und/oder verschwenkten Position gehalten, wobei das Fixierelement in vorteilhafter Weise am Gehäuserahmen angeordnet ist. Dabei kann es sich um Schraubeinheiten ebenso handeln, wie um form- oder kraftschlüssige Fixierbaugruppen, beispielsweise Haken, Clipse und dergleichen. Mit dieser Ausgestaltung der Erfindung wird ein Computergehäuse in vorteilhafter Weise derart weitergebildet, daß es bei wirtschaftlicher und einfacher Herstellung eine vereinfachte Montage, Bestückung und Wartung des Computers ermöglicht. Darüber hinaus wird die Bevorratung durch einen modularen Aufbau verbessert.

In vorteilhafter Weise werden im weiteren die jeweiligen Trageinheiten in Abhängigkeit von der Bauart und Größe der Computerfunktionseinheit untereinander auswechselbar ausgestaltet. So ist es beispielsweise bekannt, daß verschiedene Netzteiltypen und Laufwerke existieren, die Gehäuse aber immer nurzur Aufnahme eines bestimmten Typs vorgesehen sind. Durch die peripheriebezogene Wechselbarkeit der Trageinheiten kann dieses Problem gelöst werden. Es besteht beispielsweise die Möglichkeit, vormontierte Trageinheiten mit Netzteilen zu bevorraten und bei Bedarf in den Gehäuserahmen einzuhängen und einzuschwenken. Ebenso können unterschiedliche Trageinheitentypen jeweils bestückt und bevorratet werden.

Um die Übersichtlichkeit im Gehäuse weiter zu erhöhen und die Möglichkeit von Kabelbränden einzuschränken wird ferner zum besonderen Vorteil der Erfindung vorgeschlagen, daß dieses mit mindestens einer elastischen Haltevorrichtung für Kabel ausgestattet ist, welche die Kabel bei eingeschwenkten Trageinheiten in das Gehäuse zieht und bei ausgeschwenkten Trageinheiten nach außen freigibt, wobei die Haltevorrichtung ggfs. an einer verschwenkbaren Trageinheit befestigt und mit dieser gemeinsam verschwenkbar ist.

Um die Sicherheit bei einem gattungsgemäßen Gehäuse zu erhöhen, wird im Weiteren vorgeschlagen, daß eine Schnittstellenabdeckung für die Erweiterungskarten vorgesehen und mit dem Gehäuse lösbar verbunden ist, welche zumindest den Schnittstellenbereich zur Kommunikation mit dem in das Gehäuse eingebauten Computer abdeckt. Durch diese Maßnahme wird in vorteilhafter Weise sichergestellt, daß die Computerschnittstellen bei aufgesetztem Gehäusedeckel von außen nicht zugänglich sind, so daß die Auslesesicherheit eines herkömmlichen Computers erheblich verbessert ist.

In weiterer vorteilhafter Ausgestaltung der Erfindung ist vorgesehen, daß die Schnittstellenabdeckung in Form einer Klappe oder eines Gehäusedeckels mit einer Kabeldurchführung und Lüftungsöffnungen ausgestattet ist, wobei die Schnittstellenabdeckung klappenartig an das Computergehäuse angelenkt und entfernbar sein kann.

In besonderer vorteilhafter Ausgestaltung der Erfindung ist vorgesehen, daß die Schnittstellenabdeckung bzw. der Gehäusedeckel zusätzlich durch eine Befestigungsvorrichtung in Form eines Schließzylinders mit dem Gehäuserahmen in seiner geschlossenen Position verriegelt ist. Somit kann der Schnittstellenzugang von dem Besitz eines bestimmten Schlüssels abhängig und die Sicherheit erhöht werden. Aus dem Gehäusedeckel ragen durch die Kabeldurchführung nur noch die jeweiligen Verbindungskabel heraus, ohne daß die einzelnen Schnittstellen überhaupt erkennbar sind, wobei der Gehäusedeckel Belüftungsöffnungen mit Filter aufweisen kann, um eine ausreichende Kühlung zu gewährleisten. Mit der Erfindung wird somit eine einfache und wirtschaftliche Maßnahme zur Erhöhung der Sicherheit und Montagefreundlichkeit gattungsgemäßer Computergehäuse angegeben.

Zur weiteren besonders vorteilhaften Ausgestaltung der Erfindung wird darüber hinaus vorgeschlagen, daß das Front- oder Rückwandteil eine oder mehrere sich über mindestens 65% der Fläche erstreckende Öffnungen aufweist, in die einzelne Trageinheiten für Computerfunktionseinheiten, insbesondere des Erweiterungskartenträgers, über- und/oder nebeneinander einschwenkbar und durch Befestigungsvorrichtungen gehalten sind. In die Öffnung bzw. Öffnungen können die Trageinheiten eingehängt, eingeschwenkt und befestigt werden, wobei ein problemloser Austausch zu einem späteren Zeitpunkt möglich ist und die unterschiedlichen Trageinheiten beliebig miteinander kombiniert und untereinander ausgetauscht werden können. In weiterer Ausgestaltung ist vorgesehen, daß die Bereiche, die nicht mit Trageinheiten ausgestattet sind, durch Blenden verschlossen sind. Durch die Verwendung der Blenden können die nicht benötigten Teile der Öffnung abgedeckt werden und somit zuverlässig eine Störstrahlungsunterdrückung vorgenommen werden.

In weiterer Ausgestaltung der Erfindung ist vorgesehen, daß die Blenden, mit denen die Öffnungen in dem Front- oder Rückwandteil verschließbar sind, durch Federn an, vor oder hinter der Öffnung arretierbar sind. Alternativ ist vorgesehen, daß die Blenden an den freien Seitenkanten rückseitig fest angeformt oder anschraubbare Befestigungslaschen mit Gewindebohrungen, Bohrungen oder Clipsen zur weiteren Befestigung aufweisen, wobei die Befestigungslaschen und die Gewindebohrungen, Bohrungen oder Clipse auf eine Seite der Längsmittellinie der Blende positioniert sind. Durch diese besondere Anordnung der Befestigungsvorrichtungen können die aus dem Gehäuse heraus gebrochenen Blenden nach einer Drehung um 180 Grad entlang der Längsmittellinie wieder verwendet werden.

Weitere Vorteile und Merkmale der Erfindung ergeben sich aus der folgenden Beschreibung anhand der Figuren.

Es zeigt:
- Figur 1: eine perspektivische Darstellung eines Computergehäuses mit eingeschwenkten Trageinheiten und geöffneter Frontabdeckung,
- Figur 2: eine Darstellung gemäß Figur 1 mit einer vertikal ausgeschwenkten Trageinheit für ein Mainboard und Erweiterungskarten,
- Figur 3: eine Darstellung gemäß Figur 2 mit einer weiteren ausgeschwenkten Trageinheit,
- Figur 4: eine Darstellung gemäß Figur 3 mit weiteren ausgeschwenkten Trageinheiten,
- Figur 5: eine Darstellung gemäß Figur 3 mit weiteren ausgeschwenkten Trageinheiten,
- Figur 6: eine Einzelteildarstellung der Gehäusekomponenten gemäß Figur 1 bis 5,
- Figur 7: eine perspektivische Darstellung eines Computergehäuses gemäß Figur 1, wobei die Trageinheit für ein Mainbord und Erweiterungskarten horizontal verschwenkbar angeordnet ist,
- Figur 8: eine Darstellung gemäß Figur 7 mit einer horizontal ausgeschwenkten Trageinheit für das Mainboard und Erweiterungskarten,
- Figur 9: eine Darstellung gemäß Figur 8 mit einer weiteren ausgeschwenkten Trageinheit,
- Figur 10: eine Darstellung gemäß Figur 8 mit weiteren ausgeschwenkten Trageinheiten,
- Figur 11: eine Darstellung gemäß Figur 8 mit weiteren ausgeschwenkten Trageinheiten,
- Figur 12: eine Einzelteildarstellung der Gehäusekomponenten gemäß Figur 7 bis 11,
- Figur 13: eine perspektivische Darstellung eines Computergehäuses gemäß Figur 1 oder 7, welches als Tischmodell verwendet wird und eine um 90 Grad gekippte Trageinheit aufweist,
- Figur 14: eine Seitenansicht zweier L-förmiger Blenden und
- Figur 15: eine perspektivische Darstellung eines Computergehäuses mit eingesetzten Blenden in der Frontansicht.

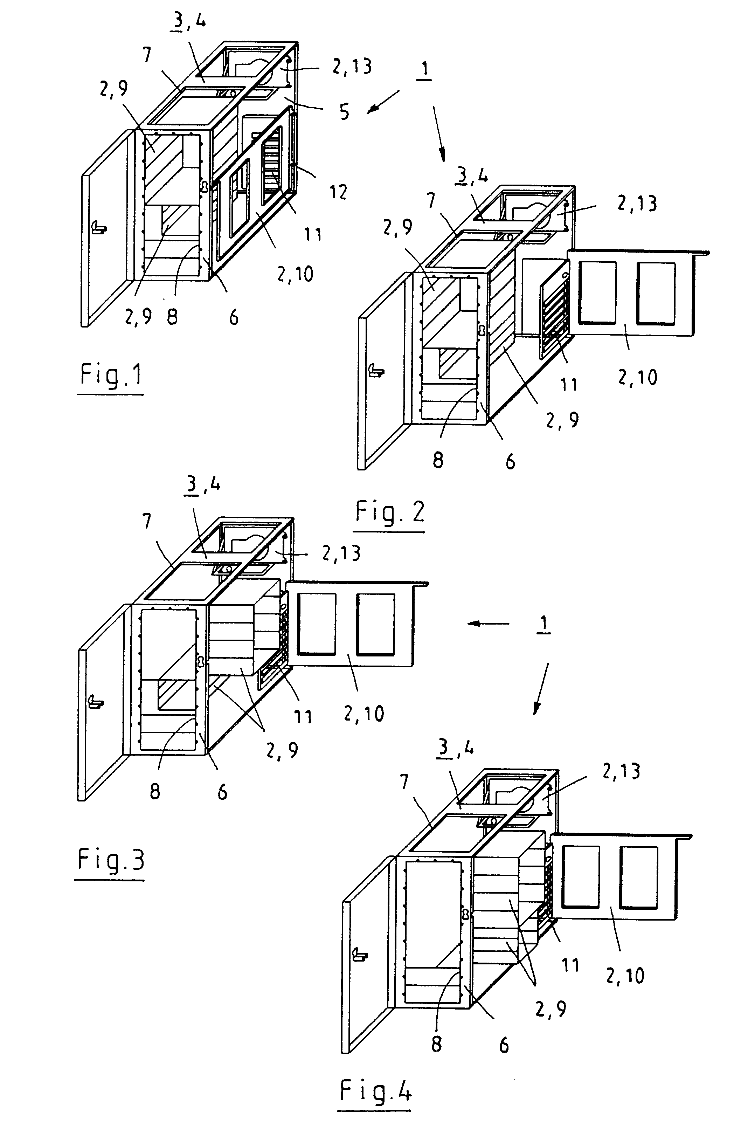

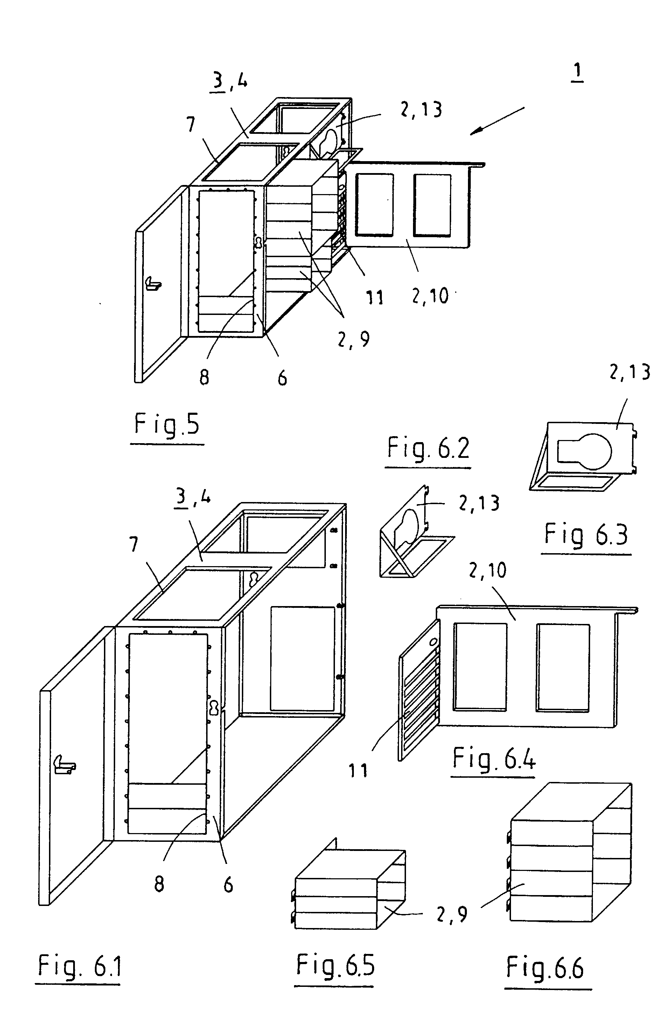

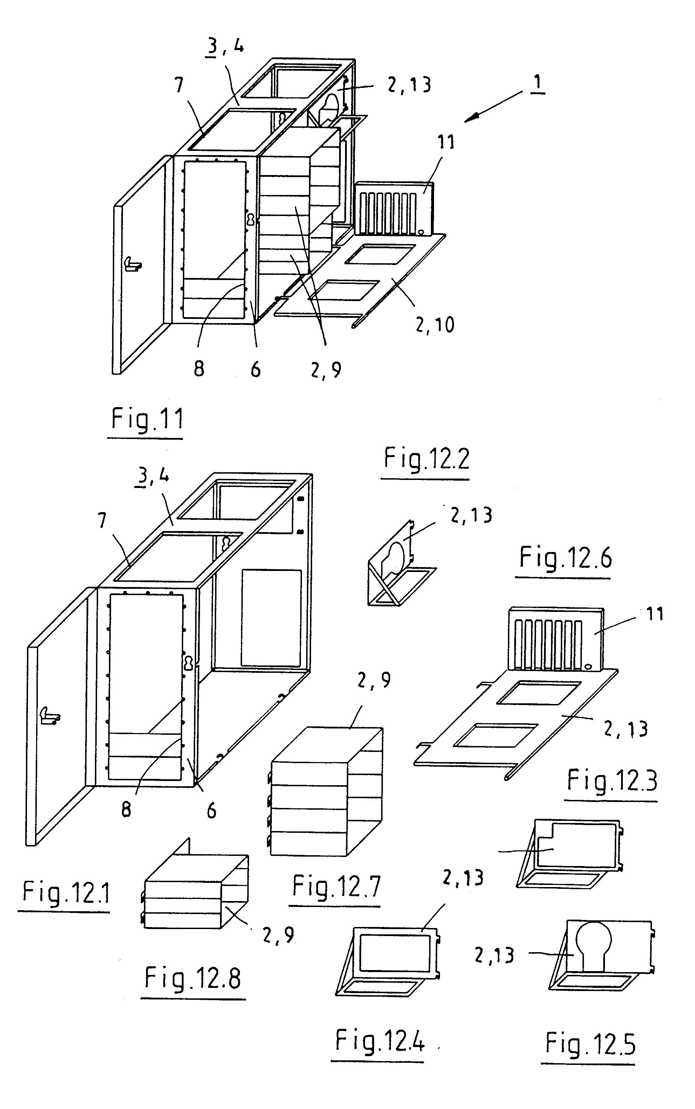

In den Figuren 1 bis 6 und 7 bis 12 ist jeweils ein Ausführungsbeispiel für ein Computergehäuse 1 gezeigt, welches vertikal angeordnet und mit unterschiedlichen Trageinheiten 2 bestückt ist, wobei die Figur 6 und 12 jeweils eine Einzeldarstellung der Gehäuseteile und Trageinheiten 2 zeigt. Das Computergehäuse besteht aus einem Gehäuserahmen 3, welcher im weiteren aus einzelnen zusammengesetzten Rahmenteilen 4 besteht, und eine bestückbare Rückfront 5 und eine ebenfalls bestückbare Vorderfront 6 aufweist. Diese Elemente sind fest miteinander verbunden und können aus Gründen der Festigkeit durch Trägerelemente versteift sein. Aus Leichtbaugründen sind die Rahmenteile 4 mit Aussparungen 7 versehen. Das Rahmenteil 4 ist ein einfacher Tragrahmen und dient der Aufnahme von Computerfunktionseinheiten. Das Rahmenteil 4 wird im weiteren nach der Bestückung an den Außenseiten verkleidet. Die in diesen Figuren nicht dargestellten Verkleidungelemente bestehen vorzugsweise aus festen oder klappbaren Metall- oder Kunststoffwänden, welche über Befestigungsmittel gehalten sind.

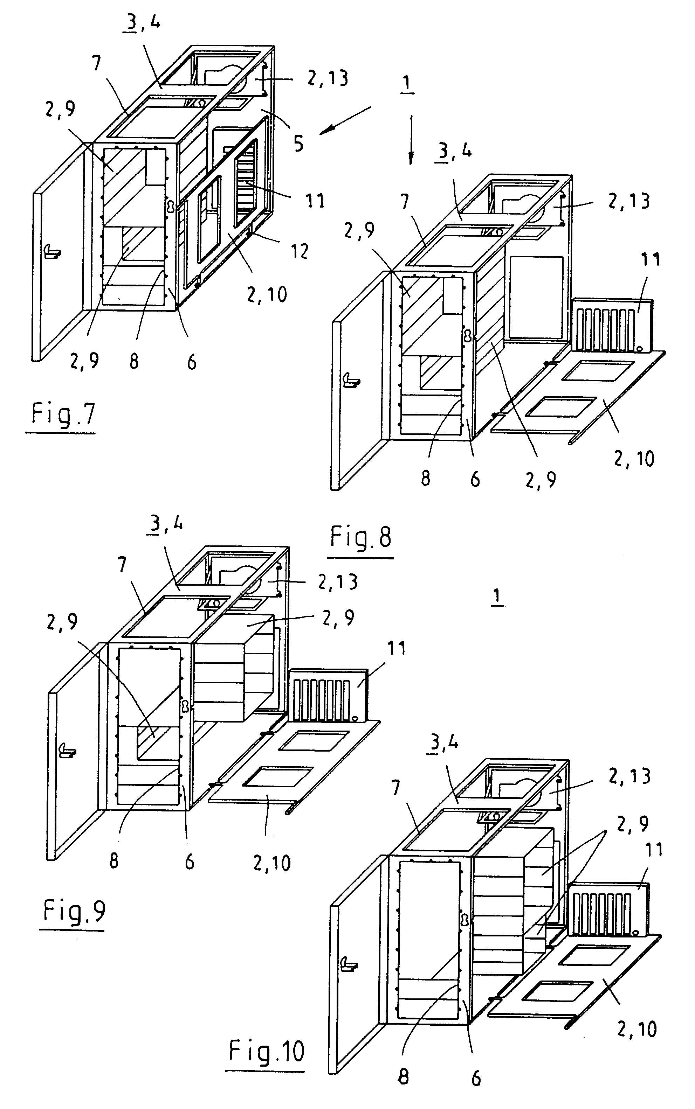

In der Vorderfront 6 ist ein Ausschnitt 8 vorhanden, in dem von hinten eine einklappbare Trageinheit 2 in Form eines Rahmenelementes 9 befestigt ist, in das bis zu 8 Laufwerkseinschübe, Laufwerke, Module oder dergleichen einschiebbar sind. Eine weitere Trageinheit 2 ist als Hauptplatinenträger 10 zur Aufnahme der nicht dargestellten Hauptplatine, auch Mainboard genannt, ausgebildet und in dem Gehäuserahmen 3 schwenkbar und lösbar befestigt. Mit dem Hauptplatinenträger 10 ist ein Erweiterungskartenträger 11 für die nicht dargestellten Erweiterungskarten fest verbunden, beispielsweise verschweißt oder verschraubt. Der Hauptplatinenträger 10 und das Erweiterungskartenträger werden erfindungsgemäß gemeinsam verschwenkt, wie insbesondere aus Figur 2 und 8 ersichtlich. Die Figuren 1 bis 6 zeigen jeweils einen vertikal verschwenkbaren Hauptplatinenträger 10 mit Erweiterungskartenträger 11, während die Figuren 7 bis 12 einen horizontal verschwenkbaren Hauptplatinenträger 10 mit Erweiterungskarten-träger 11 zeigen.

In den gezeigten Ausführungsbeispielen ist der Hauptplatinenträger 10 mit einem Scharnier 12 am Gehäuserahmen 3 befestigt. In der in Figur 1 gezeigten Einbauposition wird der Hauptplatinenträger 10 mittels nicht gezeigter Mittel am Gehäuserahmen 3 fixiert, beispielsweise durch eine dem Scharnier 12 gegenüberliegend angeordnete Schraube, einen Haltewinkel oder dergleichen.

Im Weiteren lassen sich die weiteren Trageinheiten 2 in Form des Rahmenelementes 9 für die Laufwerkseinschübe aus dem Gehäuserahmenteil 3 herausschwenken, wie in Figur 3, 4 und 9, 10 gezeigt. Die Trageinheiten 2 in Form der Netzteilträger 13 sind ebenfalls schwenkbar befestigt, wie aus Figur 5 und 11 ersichtlich. Die Netzteilträger 13 bestehen bei dem gezeigten Ausführungsbeispiels aus einem rechtwinkligen Blechteil mit Verstrebungen, während die Rahmenelemente 9 kastenförmig ausgebildet sind. Gemäß Figur 6 und 12 läßt sich der Hauptplatinenträger 10 vom Gehäuserahmen 3 ebenso wie die weiteren Trageinheiten 2, die Rahmenelemente 9 und der Netzteilträger 13 leicht und ohne Handwerkszeug lösen. In den beiden Figuren werden im weiteren die Rahmenelemente 9 in unterschiedlicher Größe und der Netzteilträger 13 in mehreren Ansichten und Ausführungen und der Hauptplatinenträger 10 mit Erweiterungskartenträger 11 gezeigt.

Es ist offensichtlich, daß sich in der in Figur 5 und 10 gezeigten Position sowohl der Hauptplatinenträger 10 als auch die Rahmenelemente 9 mit Laufwerkseinschüben und der Netzteilträger 13 leicht bestücken und schließlich verkabeln lassen. Es ist sogar möglich, die beschriebenen Module industriell, das heißt automatisch zu bestücken, und zwar im eingehängten wie im ausgehängten Zustand. Die Wartung wird durch die Schwenkbarkeit der Trageinheiten 9, 10, 13 ferner erheblich erleichtert. Die beschriebenen Ausführungsbeispiele dienen nur der Erläuterung und sind nicht beschränkend anzusehen. Insbesondere ist die Anzahl der schwenk- und lösbaren Trageinheiten 2 und die der Befestigungselemente sind nicht abschließend aufzählbar. Das Wesen der Erfindung liegt darin, den Montageraum durch schwenkbare Module zugänglicher zu machen. Weiterhin wird die Bestückung insbesondere im Bereich der Laufwerkseinschübe flexibler und schneller.

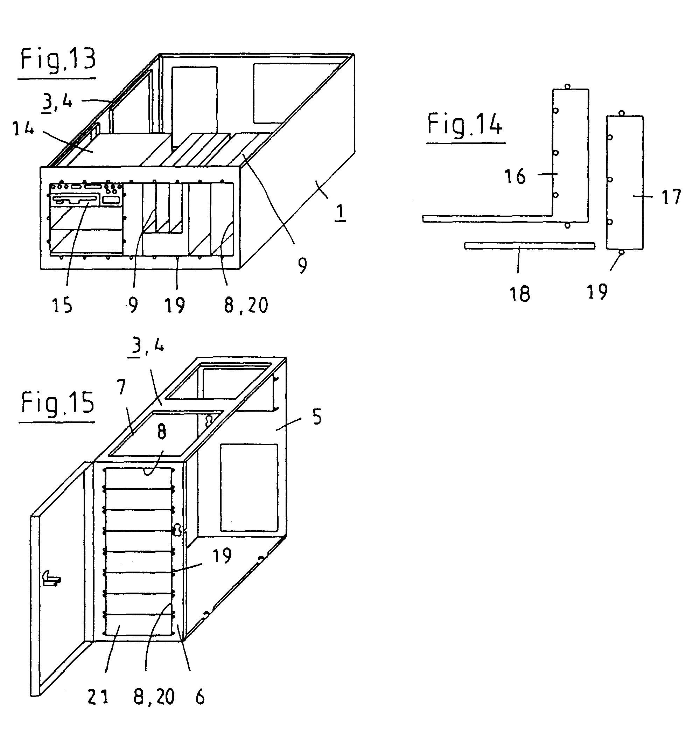

Figur 13 zeigt das Computergehäuse 1 in einer horizontalen Position, beispielsweise als Desktop-Modell zum Auflegen auf einen Schreib- oder Arbeitstisch. Die Trageinheiten 2 sind ebenfalls verschwenkbar und lösbar eingehängt, wobei eine Trageinheit 2, und zwar ein Rahmenelement 14 um 90 Grad verdreht in dem Computergehäuse 1 befestigt ist. Dieses Rahmenelement 14 dient beispielsweise zur Aufnahme von Computerfunktionseinheiten, beispielsweise speziellen Laufwerken, die nur horizontal angeordnet funktionstüchtig sind. Ferner ist in dem Rahmenelement 14 eine als einschiebbares Gehäuse ausgebildete Trägereinheit 15 eingesetzt, welche verschiedene Bedien- und Anzeigeelemente und ein Diskettenlaufwerk aufweist. Das Rahmenelement 14 kann schwenkbar oder fest mit dem Computergehäuse verbunden sein, wobei in Figur 13 das Rahmenelement 14 nahezu quadratisch ausgebildet ist, so daß die Öffnung 8 im Bereich des Rahmenelementes 14 geschlossen ist. Für den Fall, daß das verschwenkbare Rahmenelement 14 eine kleinere Abmessung oder eine geringere Höhe gegenüber der Breite aufweist, können L-förmige Blenden 16 oder eine Kombination der Blenden 17, 18, wie sie in Figur 14 dargestellt sind, zum Verschließen der Öffnung 8 benutzt werden. Die Blenden 16 bis 18 sind ebenso, wie die Vorderfront 6 im Weiteren mit Befestigungsvorrichtungen 19 beispielsweise in Form von Laschen, Gewindebohrungen oder Bohrungen zur Befestigung der Computerfunktionseinheiten ausgestattet. Die Aufzählung ist nur beispielhaft und nicht vollständig.

Die in Figur 15 gezeigte perspektivische Ansicht eines Computergehäuses 1 mit einer Vorderfront 6 weist, wie bereits beschrieben wurde, einen Ausschnitt 8 auf, so daß Laufwerke einschiebbar und von der Gehäusefrontseite zugänglich sind. Dieser Ausschnitt 8 läßt in der Gehäusefront eine Öffnung 20 entstehen, die mit einem Abdeckblech 21 verschlossen wird. Das Abdeckblech 21, welches auch aus einem anderen elektrisch leitenden Material als Blech gebildet sein kann, ist mit Perforationen versehen.

### Bezugszeichenliste:

- 1: Computergehäuse
- 2: Trageinheit
- 3: Gehäuserahmen
- 4: Rahmenteil
- 5: Rückfront
- 6: Vorderfront
- 7: Aussparung
- 8: Ausschnitt
- 9: Rahmenelement
- 10: Hauptplatinenträger
- 11: Erweiterungskartenträger
- 12: Scharnier
- 13: Netzteilträger
- 14: Rahmenelement
- 15: Trägereinheit
- 16: Blende
- 17: Blende
- 18: Blende
- 19: Befestigungsvorrichtung
- 20: Öffnung
- 21: Abdeckblech

## Patentansprüche

1. Computergehäuse (1), bestehend aus einem Gehäuserahmen (3), Gehäusewandteilen sowie zumindest teilweise verschwenkbaren Trag- und Befestigungseinheiten für Computerfunktionseinheiten, wobei mindestens eine Trageinheit (2), bestehend aus Hauptplatinenträger (10) und Erweiterungskartenträger (11), vorhanden ist, welche aus einer Einbauposition in eine Montage- und Wartungsposition verschwenkbar ausgebildet ist,
dadurch gekennzeichnet,
daß der mit dem Hauptplatinenträger (10) gemeinsam verschwenkbare Erweiterungskartenträger (11) in der Einbauposition zumindest einen Teil einer äußeren Seitenwand bildet.

2. Computergehäuse nach Anspruch 1,
dadurch gekennzeichnet,
daß mindestens eine weitere Trageinheit (2,9,10,13) für Computerfunktionseinheiten gegenüber dem Gehäuserahmen (3) aus einer Einbauposition in eine Montage- und Wartungsposition verschwenkbar ausgebildet ist.

3. Computergehäuse nach Anspruch 1 oder 2,
dadurch gekennzeichnet,
daß eine oder mehrere der verschwenkbaren Trageinheiten (2,9,10,13) zusätzlich lösbar am Gehäuserahmen (3) einhängbar ausgebildet sind.

4. Computergehäuse nach Anspruch 1, 2 oder 3,
dadurch gekennzeichnet,
daß mindestens eine Trageinheit (2,9,10,13) im Gehäuse wahlweise horizontal oder vertikal verschwenkbar angeordnet und in der jeweiligen Position arretierbar ist.

5. Computergehäuse nach Anspruch 1, 2 oder 3,
dadurch gekennzeichnet,
daß eine Trageinheit (2,9,10,13) zur Ausstattung mit einer Trägereinheit (15) mit Bedien-, Anzeigeelementen, mindestens einem Minischalter, einer Audiobuchse, einer Videobuchse, einem 3,5 Zoll-Laufwerk und/oder einer Schnittstelle ausgestattet ist.

6. Computergehäuse nach Anspruch 4,
dadurch gekennzeichnet,
daß eine L-förmige Blende (16,17,18) zum Verschließen der vorhandenen Öffnung (20) im Gehäusewandteil vorgesehen ist, sofern die Trageinheit (2,9,10,13) unterschiedliche Abmessungen in der Höhe und Breite aufweist.

7. Computergehäuse nach Anspruch 4 oder 6,
dadurch gekennzeichnet,
daß die L-förmige Blende (16,17,18) Befestigungsvorrichtungen (19), beispielsweise in Form von Bohrungen oder Gewindebohrungen, für die Trageinheit (2,9,10,13) aufweist.

8. Computergehäuse nach einem oder mehreren der Ansprüche 1 bis 7,
dadurch gekennzeichnet,
daß wenigstens eine verschwenkbare Trageinheit (2,9,10,13) Scharnierelemente aufweist, die mit am Gehäuserahmen (3) angeordneten korrespondierenden Gegenstücken zusammenwirken.

9. Computergehäuse nach Anspruch 8,
dadurch gekennzeichnet,
daß die Scharnierelemente hakenförmige Elemente sind, die mit Laschen am Gehäuserahmen (3) zusammenwirken.

10. Computergehäuse nach einem oder mehreren der Ansprüche 1 bis 9,
dadurch gekennzeichnet,
daß die Laschen lochartig ausgebildet an einem Teil des Gehäuserahmens (3) angeordnet sind.

11. Computergehäuse nach einem oder mehreren der Ansprüche 1 bis 10,
dadurch gekennzeichnet,
daß die Trageinheiten (2,9,10,13) alle zur gleichen Seite des Gehäuserahmens (3) hin verschwenkbar sind.

12. Computergehäuse nach einem oder mehreren der Ansprüche 1 bis 11,
dadurch gekennzeichnet,
daß die verschwenkbare Trageinheit (2,9,10,13) mittels eines Fixierelementes in der Einbauposition und/oder verschwenkten Position gehalten ist.

13. Computergehäuse nach Anspruch 12,
dadurch gekennzeichnet,
daß das Fixierelement am Gehäuserahmen (3) angeordnet ist.

14. Computergehäuse nach einem oder mehreren der Ansprüche 1 bis 13,
dadurch gekennzeichnet,
daß die jeweiligen Trageinheiten (2,9,10,13) in Abhängigkeit von der Bauart und Größe der Computerfunktionseinheit untereinander auswechselbar sind.

15. Computergehäuse nach einem oder mehreren der Ansprüche 1 bis 14,
dadurch gekennzeichnet,
daß dieses mit mindestens einer elastischen Haltevorrichtung für Kabel ausgestattet ist, welche die Kabel bei eingeschwenkten Trageinheiten (2,9,10,13) in das Gehäuse zieht und bei ausgeschwenkten Trageinheiten (2,9,10,13) nach außen freigibt.

16. Computergehäuse nach Anspruch 15,
dadurch gekennzeichnet,
daß die Haltevorrichtung an einer verschwenkbaren Trageinheit (2,9,10,13) befestigt und mit dieser gemeinsam verschwenkbar ist.

17. Computergehäuse nach einen oder mehreren der Ansprüche 1 bis 16,
dadurch gekennzeichnet,
daß eine Schnittstellenabdeckung für die Erweiterungskarten vorgesehen und mit dem Computergehäuse (1) lösbar verbunden ist, welche zumindest den Schnittstellenbereich zur Kommunikation mit dem in das Computergehäuse (1) eingebauten Computer abdeckt.

18. Computergehäuse nach Anspruch 17,
dadurch gekennzeichnet,
daß die Schnittstellenabdeckungen in Form eines Gehäusedeckels das gesamte Gehäusewandteil des Schnittstellenbereiches abdeckt oder daß die Abdeckung des Schnittstellenbereichs oder der gesamten Gehäuseseite mit den Schnittstellen durch eine separat vorgesehene Klappe erfolgt.

19. Computergehäuse nach Anspruch 17 und 18,
dadurch gekennzeichnet,
daß die Schnittstellenabdeckungen in Form einer Klappe oder eines Gehäusedeckels mit einer Kabeldurchführung und Lüftungsöffnungen ausgestattet ist.

20. Computergehäuse nach Anspruch 17 und 18,
dadurch gekennzeichnet,
daß die Schnittstellenabdeckung klappenartig an das Computergehäuse (1) angelenkt und entfernbar ist.

21. Computergehäuse nach einem oder mehreren der Ansprüche 17 bis 20,
dadurch gekennzeichnet,
daß die Schnittstellenabdeckung bzw. der Gehäusedeckel zusätzlich durch eine Befestigungsvorrichtung in Form eines Schließzylinders mit dem Gehäuserahmen (3) in seiner geschlossenen Position verriegelt ist.

22. Computergehäuse nach einem oder mehreren der Ansprüche 17 bis 21,
dadurch gekennzeichnet,
daß das Front- oder Rückwandteil eine oder mehrere sich über mindestens 65% der Fläche erstreckende Öffnungen (20) aufweist, in die einzelne Trageinheiten (2) für Computerfunktionseinheiten, insbesondere des Erweiterungskartenträgers (11), über- und/oder nebeneinander einschwenkbar und durch Befestigungsvorrichtungen gehalten sind.

23. Computergehäuse nach Anspruch 22,
dadurch gekennzeichnet,
daß die Bereiche, die nicht mit Trageinheiten (2) ausgestattet sind, durch Blenden (16, 17, 18) verschlossen sind.

24. Computergehäuse nach Anspruch 23,
dadurch gekennzeichnet,
daß die Blenden (16, 17, 18), mit denen die Öffnungen (20) in dem Front- oder Rückwandteil verschließbar sind, durch Federn an, vor oder hinter der Öffnung (20) arretierbar sind.

25. Computergehäuse nach Anspruch 23,
dadurch gekennzeichnet,
daß die Blenden (16, 17, 18), an den freien Seitenkanten rückseitig fest angeformt oder anschraubbare Befestigungslaschen mit Gewindebohrungen, Bohrungen oder Clipsen zur weiteren Befestigung aufweisen, wobei die Befestigungslaschen und die Gewindebohrungen, Bohrungen oder Clipse auf einer Seite der Längsmittellinie der Blenden (16, 17, 18) positioniert sind.

## Claims

1. A computer casing (1) consisting of a casing frame (3), casing wall parts and at least partially swivellable mounting and attachment units for computer functional units, wherein at least one mounting unit (2) comprised of a main board rack (10) and expansion card rack (11), which is designed to be swivelled from a built-in position to an assembly and maintenance position, characterized by the fact that the expansion card rack (11) that can be swivelled jointly with the main board rack 10) forms at least a part of the outer side wall in the built-in position.

2. A computer casing according to Claim 1, characterized by the fact that at least one additional mounting unit (2, 9, 10, 13) for computer functional units is designed to be swivelled from a built-in position to an assembly and maintenance position relative to the casing frame (3).

3. A computer casing according to Claim 1 or 2, characterized by the fact that one or several of the swivellable mounting units (2, 9, 10, 13) is/are additionally designed to be detachably suspended to the casing frame (3).

4. A computer casing according to Claim 1, 2 or 3, characterized by the fact that at least one mounting unit (2, 9, 10, 13) in the casing is arranged in an optionally horizontally or vertically swivellable manner, and can be locked in the respective position.

5. A computer casing according to Claim 1, 2 or 3, characterized by the fact that a mounting unit (2, 9, 10, 13) to be fitted with a mounting unit (15) is equipped with controls, indicators, at least one mini-switch, an audio jack, a video jack, a 3.5 inch disk drive and/or an interface.

6. A computer casing according to Claim 4, characterized by the fact that an L-shaped mask (16, 17, 18) is provided to cover the existing hole (20) in the casing wall part, provided the mounting unit (2, 9, 10, 13) exhibits differing height and width dimensions.

7. A computer casing according to Claim 4 or 6, characterized by the fact that the L-shaped mask (16, 17, 18) exhibits attachment devices (19), for example in the form of holes or threaded holes, for mounting unit (2, 9, 10, 13).

8. A computer casing according to one or several of Claims 1 to 7, characterized by the fact that at least one swivellable mounting unit (2, 9, 10, 13) exhibits hinge elements which interact with corresponding mating components arranged on the casing frame (3).

9. A computer casing according to Claim 8, characterized by the fact that the hinge elements are hook-shaped elements that interact with straps on the casing frame (3).

10. A computer casing according to one or several of Claims 1 to 9, characterized by the fact that the straps are designed with holes, arranged on one part of the casing frame (3).

11. A computer casing according to one or several of Claims 1 to 10, characterized by the fact that the mounting units (2, 9, 10, 13) can all be swivelled to the same side of the casing frame (3).

12. A computer casing according to one or several of Claims 1 to 11, characterized by the fact that the swivellable mounting unit (2, 9, 10, 13) is held in the built-in and/or swivelled position by means of a fixing element.

13. A computer casing according to Claim 12, characterized by the fact that the fixing element is arranged on the casing frame (3).

14. A computer casing according to one or several of Claims 1 to 13, characterized by the fact that the respective mounting units (2, 9, 10, 13) are interchangeable, depending on the model and size of the computer functional unit.

15. A computer casing according to one or several of Claims 1 to 14, characterized by the fact that it is equipped with at least one elastic cable retaining device, which pulls the cables into the casing with the mounting units (2, 9, 10, 13) swivelled in, and releases the cables to the outside with the mounting units (2, 9, 10, 13) swivelled out.

16. A computer casing according to Claim 15, characterized by the fact that the retaining device is secured to a swivellable mounting unit (2, 9, 10, 13) and can be swivelled jointly with this mounting unit.

17. A computer casing according to one or several of Claims 1 to 16, characterized by the fact that an interface cover is provided for the expansion cards and detachably connected with the computer casing 91), which covers at least the interface area for communication with the computer built into the computer casing (1).

18. A computer casing according to Claim 17, characterized by the fact that the interface covers is equipped with cable gland and vent holes in the form of a flap or casing lid.

19. Computer casing according to Claim 17, characterized by the fact that the interface covers is equipped with cable gland and vent holes in the form of a flap or casing lid.

20. A computer casing according to Claims 17 and 18, characterized by the fact that the interface cover is hinged to the computer casing (1) like a flap, and can be removed.

21. A computer casing according to one or several of Claims 17 to 20, characterized by the fact that the interface cover or casing lid is additionally locked in its closed position with the casing frame (3) by a fastening device in the form of a lock barrel.

22. A computer casing according to one or several of Claims 17 to 21, characterized by the fact that the front or back wall part exhibits one or several holes (20) extending over at least 65% of the surface, in which attachment devices hold individual mounting units (2) for computer functional units, in particular the expansion card rack (11), in such a way that they can be swivelled in one on top of and/or next to the other.

23. A computer casing according to Claim 22, characterized by the fact that masks (16, 17, 18) close off the areas not equipped with mounting units (2).

24. A computer casing according to Claim 23, characterized by the fact that the masks (16, 17, 18) used to close off the holes (20) in the front or back wall part can be locked in position in front or back of the hole (20).

25. A computer casing according to Claim 23, characterized by the fact that the masks (16, 17, 18) exhibit fastening straps that are hard-mounted or screwed on the back of the free side edges, and have threaded holes, holes or clips for additional fastening, wherein the fastening straps and threaded holes, holes or clips are positioned on one side of the longitudinal center line of the masks (16, 17, 18).

## Revendications

1. Carter d'ordinateur (1), comprenant un cadre de carter (3), des parois de carter ainsi que des unités de support et de fixation, pouvant pivoter au moins partiellement, pour des unités fonctionnelles d'ordinateur, au moins une unité de support (2), comprenant un support de carte mère (10) et un support de carte d'extension (11), étant présente, laquelle est conçue de façon à pouvoir pivoter d'une position d'installation à une position de montage et d'entretien, caractérisé en ce que le support de carte d'extension (11) pouvant pivoter conjointement avec le support de carte mère (10) constitue dans la position d'installation au moins une partie d'une paroi latérale extérieure.

2. Carter d'ordinateur selon la revendication 1, caractérisé, en ce qu'au moins une autre unité de support (2, 9, 10, 13) pour des unités fonctionnelles d'ordinateur est conçue de façon à pouvoir pivoter par rapport au cadre de carter (3) d'une position d'installation à une position de montage et d'entretien.

3. Carter d'ordinateur selon la revendication 1 ou 2, caractérisé, en ce qu'une ou plusieurs des unités de support pivotantes (2, 9, 10, 13,) est (sont) conçue(s) en supplément de façon amovible et à pouvoir être accrochée(s) sur le cadre de carter (3).

4. Carter d'ordinateur selon la revendication 1, 2 ou 3, caractérisé, en ce qu'au moins une unité de support (2, 9, 10, 13) est disposée dans le carter de façon à pouvoir être orientée horizontalement ou verticalement et peut être verrouillée dans la position respective.

5. Carter d'ordinateur selon la revendication 1, 2 ou 3, caractérisé, en ce qu'une unité de support (2, 9, 10, 13) est équipée pour l'équipement avec une unité porteuse (15) avec des éléments de commande, des éléments d'affichage, au moins un minirupteur, un jack audio, un jack vidéo, un lecteur 3,5 pouces et/ou une interface.

6. Carter d'ordinateur selon la revendication 4, caractérisé, en ce qu'il est prévu un cache (16, 17, 18) en forme de L pour l'obturation de l'ouverture existante (20) dans la paroi de carter, l'unité de support (2, 9, 10, 13) présentant des dimensions différentes en hauteur et en largeur.

7. Carter d'ordinateur selon la revendication 4 ou 6, caractérisé, en ce que le cache (16, 17, 18) en forme de L présente des dispositifs de fixation (19), par exemple sous la forme d'alésages ou de taraudages, pour l'unité de support (2, 9, 10, 13).

8. Carter d'ordinateur selon l'une quelconque ou plusieurs des revendications 1 à 7, caractérisé, en ce qu'au moins une unité de support (2, 9, 10, 13) pivotante présente des éléments à charnière qui agissent conjointement avec des pièces inverses correspondantes disposées sur le cadre de carter (3).

9. Carter d'ordinateur selon la revendication 8, caractérisé, en ce que les éléments à charnière sont des éléments en forme de crochet, qui agissent conjointement avec des pattes disposées sur le cadre de carter (3).

10. Carter d'ordinateur selon l'une quelconque ou plusieurs des revendications 1 à 9, caractérisé, en ce que les pattes sont conçues en forme de trou et sont disposées sur une partie du cadre de carter (3)

11. Carter d'ordinateur selon l'une quelconque ou plusieurs des revendications 1 à 10, caractérisé, en ce que les unités de support (2, 9, 10, 13) peuvent toutes pivoter en direction du même côté du cadre de carter (3).

12. Carter d'ordinateur selon l'une quelconque ou plusieurs des revendications 1 à 11, caractérisé, en ce que l'unité de support pivotante (2, 9, 10, 13) est maintenue au moyen d'un élément de fixation dans la position d'installation et/ou position basculée.

13. Carter d'ordinateur selon la revendication 12, caractérisé, en ce que l'élément de fixation est disposé sur le cadre de carter (3)

14. Carter d'ordinateur selon l'une quelconque ou plusieurs des revendications 1 à 13, caractérisé, en ce que les unités de support respectives (2, 9, 10, 13) sont interchangeables en fonction de la forme de construction et de la grandeur de l'ensemble fonctionnel de l'ordinateur.

15. Carter d'ordinateur selon l'une quelconque ou plusieurs des revendications 1 à 14, caractérisé, en ce que celui-ci est équipé d'au moins un dispositif de retenue élastique pour câble, lequel tire le câble dans le carter avec des unités de support (2, 9, 10, 13) entrées et le libère vers l'extérieur avec des unités de support (2, 9, 10, 13) sorties.

16. Carter d'ordinateur selon la revendication 15, caractérisé, en ce que le dispositif de retenue est fixé sur une unité support (2, 9, 10, 13) pivotante et peut pivoter conjointement avec celle-ci.

17. Carter d'ordinateur selon l'une quelconque ou plusieurs des revendications 1 à 16, caractérisé, en ce qu'un recouvrement d'interface est prévu pour les cartes d'extension et est relié de façon amovible au carter d'ordinateur (1), lequel recouvre au moins la zone d'interface pour la communication avec l'ordinateur installé dans le carter d'ordinateur (1).

18. Carter d'ordinateur selon la revendication 17, caractérisé, en ce que les recouvrements d'interface recouvrent l'ensemble de la paroi de carter de la zone d'interface sous la forme d'un couvercle de carter ou en ce que le recouvrement de la zone d'interface ou de l'ensemble du côté du carter s'effectue avec les interfaces par un clapet prévu séparément.

19. Carter d'ordinateur selon les revendications 17 et 18, caractérisé, en ce que les recouvrements d'interface sous la forme d'un clapet ou d'un couvercle de carter sont équipés d'un passage de câble et d'ouvertures d'aération.

20. Carter d'ordinateur selon les revendications 17 et 18, caractérisé, en ce que le recouvrement d'interface est articulé à la façon d'un clapet sur le carter d'ordinateur (1) et peut être enlevé.

21. Carter d'ordinateur selon l'une quelconque ou plusieurs des revendications 17 à 20, caractérisé, en ce que le recouvrement d'interface ou le couvercle de carter est verrouillé en supplément par un dispositif de fixation sous la forme d'un cylindre de fermeture avec le cadre de carter (3) dans sa position fermée.

22. Carter d'ordinateur selon l'une quelconque ou plusieurs des revendications 17 à 21, caractérisé, en ce que la paroi avant ou la paroi arrière présente une ou plusieurs ouvertures (20) s'étendant sur au moins 65 % de la surface, dans lesquelles des unités de support (2) individuelles pour des unités fonctionnelles d'ordinateur, en particulier du support de carte d'extension (11), peuvent être basculées les une au-dessus des autres et/ou les unes à côté des autres et sont maintenues par des dispositifs de fixation.

23. Carter d'ordinateur selon la revendication 22, caractérisé, en ce que les zones, qui ne sont pas équipées d'unité de support (2), sont fermées par des caches (16, 17, 18).

24. Carter d'ordinateur selon la revendication 23, caractérisé, en ce que les caches (16, 17, 18), avec lesquels les ouvertures (20) pratiquées dans la paroi avant ou la paroi arrière doivent être fermées, peuvent être verrouillés par des ressorts sur, avant ou après l'ouverture (20).

25. Carter d'ordinateur selon la revendication 23, caractérisé, en ce que les caches (16, 17, 18) sont prévus de façon fixe sur les arêtes latérales libres sur la face arrière ou présentent des pattes de fixation vissables avec des taraudages, des alésages ou des clips pour la fixation ultérieure, les pattes de fixation et les taraudages, alésages ou clips étant positionnés sur un côté de la ligne médiane longitudinale des caches (16, 17, 18).
